# EUROPÄISCHE PATENTANMELDUNG

(11) **EP 0 530 435 A1**
(43) Veröffentlichungstag der Anmeldung: **10.03.1993**
(21) Anmeldenummer: 92105493.8
(22) Anmeldetag: 31.03.1992
(51) Int. Cl.: B65G 47/53

(54) **Duplex-Förderlinie**

(30) Priorität: 03.09.1991 DE 4129294
(71) Anmelder: PROTECH AUTOMATION GmbH, D-51147 Köln (DE)
(72) Erfinder: Blöcker, Detlef, Dipl.-Ing., W-5330 Königswinter 21 (DE)
(74) Vertreter: Selting, Günther, Dipl.-Ing.

(57) **Zusammenfassung**

Zum Umsetzen eines Werkstückträgers (16) von einem Duplexförderer (10) auf einen unter einem Winkel hierzu angeordneten weiteren Duplexförderer (13) sind die im Winkel äußeren Förderbänder (12,15) so ausgebildet, daß sie sich über die Umsetzstation (21) erstrecken und ihre Enden einander benachbart sind. Die im Winkel innen liegenden Förderbänder (11,14) sind mit ihren Enden ebenfalls benachbart angeordnet. In Verlängerung eines jeden kurzen Förderbandes (11,14) ist eine Stützvorrichtung (22,25) angeordnet, die heb- und senkbar ist. Ein ankommender Werkstückträger (16) wird von der angehobenen Stützvorrichtung (22) übernommen, während er über die abgesenkte Stützvorrichtung (25) hinwegläuft. Anschließend wird die übernehmende Stützvorrichtung (22) abgesenkt und die andere Stützvorrichtung (25) angehoben. Der Werkstückträger wird dadurch auf den abgehenden Duplexförderer (13) umgesetzt. Die Umsetzstation kann auch so ausgebildet sein, daß sie eine Umsetzung um 180° vornimmt.

## Beschreibung

Die Erfindung betrifft eine Duplex-Förderlinie mit einer Umsetzstation, die zwei Duplexförderer miteinander verbindet.

Bei Montagemaschinen, bei denen Werkstücke auf Werkstückträgern (Paletten) entlang einer Förderlinie transportiert werden, werden im allgemeinen Duplexförderer benutzt, die zwei synchron angetriebene parallele Förderbänder aufweisen, auf denen die Seitenränder der Werkstückträger ruhen. Wenn innerhalb einer Förderlinie die Förderrichtung verändert werden muß und beispielsweise zwei Duplexförderer unter einem rechten Winkel zueinander angeordnet sind, ist eine Umsetzstation erforderlich, die die Werkstückträger von einem Duplexförderer auf den anderen Duplexförderer überträgt. Bekannt sind Umsetzstationen, die nach Art eines Drehtellers angeordnet sind und die einen eigenen Duplexförderer aufweisen. Eine derartige Umsetzstation empfängt den Werkstückträger von dem ankommenden Duplexförderer, führt eine 90°-Drehung aus und übergibt den Werkstückträger an den abgehenden Duplexförderer. Derartige Umsetzstationen sind jedoch aufwendig, weil sie einen Drehantrieb, einen eigenen Duplexförderer und zusätzlich einen Förderantrieb benötigen. Außerdem ist eine komplizierte Steuerung erforderlich.

Ferner gibt es Fälle, in denen zwei parallele, gegenläufig zueinander angetriebene Duplex-Förderer miteinander zu verbinden sind, beispielsweise um eine mäanderförmige Pufferstrecke zu bilden, auf der Werkstückträger vorübergehend zwischengespeichert werden, beispielsweise um Taktzeitschwankungen auszugleichen und Kurzzeitstörungen zu überbrücken.

Der Erfindung liegt die Aufgabe zugrunde, eine Duplex-Förderlinie zu schaffen, die eine vereinfachte Umsetzstation zum Umsetzen von Werkstückträgern von einem Duplexförderer auf einen anderen Duplexförderer aufweist.

Die Lösung dieser Aufgabe erfolgt erfindungsgemäß bei einer Duplex-Förderlinie mit 90°-Umsetzstation mit den Merkmalen des Patentanspruchs 1 und bei einer Duplex-Förderlinie mit 180°-Umsetzstation mit den Merkmalen des Patentanspruchs 2.

Beiden Varianten ist gemeinsam, daß sich die beiden äußeren Förderbänder bis in die Umsetzstation hinein erstrecken, während die inneren Förderbänder vor der Umsetzstation enden. Bei der 90°-Umsetzstation sind die im Winkel innenliegenden Förderbänder (in Richtung auf die Umsetzstation) kürzer als die im Winkel außenliegenden Förderbänder. Die beiden Duplexförderer stoßen also gewissermaßen auf Gehrung gegeneinander (d.h. bei einem Umsetzwinkel von 90°, unter einem Gehrungswinkel von 45°). Dabei übernimmt den Transport des Werkstückträgers zu dem abgehenden Duplexförderer nur das längere Förderband des ankommenden Duplexförderers, während das kürzere Förderband des ankommenden Duplexförderers den Werkstückträger in die Umsetzstation hinein nur vorschiebt, jedoch dort nicht mehr abstützt oder bis in die endgültige Position hinein vortreibt. Die Umsetzung des Werkstückträgers von dem einen Duplexförderer auf den anderen Duplexförderer erfolgt somit nur unter Ausnutzung des jeweils äußeren (längeren) Förderbandes, während in Verlängerung des - in Bezug auf den Winkel - inneren Förderbandes eine Stützvorrichtung angeordnet ist, die die betreffende Seite des Werkstückträgers zwar abstützt, nicht aber notwendigerweise antreibt. Zur Durchführung des Richtungswechsels ist die Stützvorrichtung aus der Förderebene absenkbar. Der Richtungswechsel wird dadurch hervorgerufen, daß das längere Förderband des abgehenden Duplexförderers die eine Seite des Werkstückträgers antreibt, bis der Werkstückträger mit seinen beiden Seitenrändern voll auf dem abgehenden Duplexförderer aufliegt.

Bei einer 180°-Umsetzstation rahmen die beiden parallel zueinander verlaufenden Förderbänder die Umsetzstation gewissermaßen ein, während die inneren Förderbänder vor der Umsetzstation enden. Auf der den inneren Förderbändern gegenüberliegenden Seite der Umsetzstation befindet sich ein Querförderband, auf das die Vorderkante eines ankommendes Werkstückträgers aufgesetzt wird und das diesen Werkstückträger von dem Aufnahmebereich der Umsetzstation bis zu dem Abgabebereich der Umsetzstation transportiert, während die gegenüberliegende Kante des Werkstückträgers von einer Stützvorrichtung abgestützt ist. Wenn der Werkstückträger den Abgabebereich erreicht hat, wird die Stützvorrichtung absenkt und der Werkstückträger wird von dem abgehenden äußeren Förderband entgegen seiner Ankunftsrichtung abtransportiert. Auch hierbei sind die Stützvorrichtungen zur Durchführung des Richtungswechsels absenkbar.

Die Stützvorrichtungen sind reibungsarm ausgebildet, um die betreffende Seitenkante des Werkstückträgers nicht zurückzuhalten und zu erreichen, daß der Werkstückträger, der im Bereich der Umsetzstation an nur einem Seitenrand angetrieben wird, nicht verkantet.

Die Umsetzstation bietet den Vorteil eines extrem einfachen Aufbaus, ohne Dreh- oder Wendeantrieb. Die Stützvorrichtungen haben vorzugsweise nicht-angetriebene Rollen, jedoch können auch angetriebene Rollen vorhanden sein. Zweckmäßigerweise sind die Stützvorrichtungen so gesteuert, daß in Abhängigkeit von der jeweiligen Laufrichtung die eine Stützvorrichtung etwa in die Förderebene hinein angehoben ist, während die andere Stützvorrichtung abgesenkt ist, die Stützvorrichtungen also wechselseitig oder invers zueinander gesteuert sind. Diejenige Stützvorrichtung, die quer zum ankommenden Duplexförderer verläuft, ist jeweils im abgesenkten Zustand. Danach wird diese Stützvorrichtung auf die Förderebene angehoben und die quer zum abgehenden Förderer verlaufende Stützvorrichtung wird abgesenkt, um den Werkstückträger vollständig auf den abgehenden Duplexförderer zu übertragen.

Im folgenden wird ein Ausführungsbeispiel der Erfindung unter Bezugnahme auf die Zeichnungen näher erläutert.

Es zeigen:
- Fig. 1: eine Draufsicht einer 90°-Umsetzstation,
- Fig. 2: einen Schnitt entlang der Linie II-II von Fig. 1,
- Fig. 3: eine Draufsicht einer 180°-Umsetzstation und
- Fig. 4: einen Schnitt entlang der Linie IV-IV von Fig. 3.

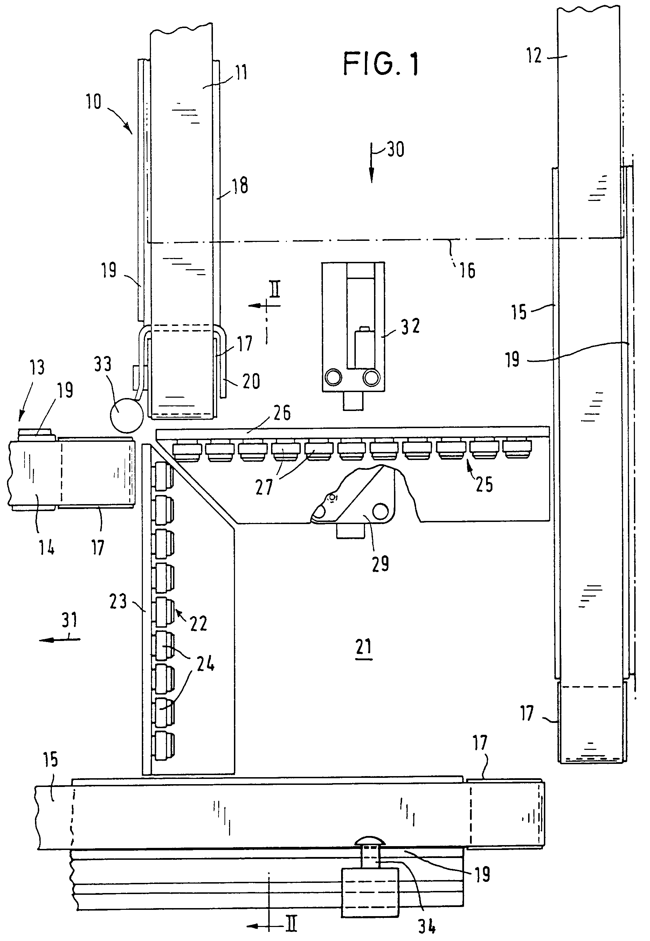

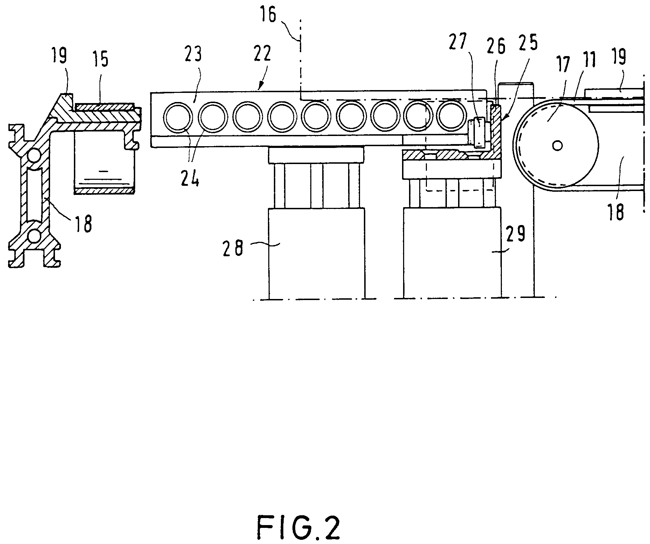

Die Förderlinie nach den Fign. 1 und 2 weist einen ersten Duplexförderer 10 auf, der aus den mit gegenseitigem Abstand angeordneten parallelen Förderbändern 11,12 besteht und einen zweiten Duplexförderer 13, der aus den beiden parallelen, mit gegenseitigem Abstand angeordneten Förderbändern 14 und 15 besteht. Die beiden Duplexförderer 10,13 sind rechtwinklig zueinander angeordnet. Auf den Duplexförderern können Werkstückträger 16 von quadratischem Grundriß transportiert werden, die mit ihren Seitenrändern auf die beiden Förderbänder, z.B. die Förderbänder 11,12, aufgelegt werden.

Jedes der Förderbänder besteht aus einem endlosen Riemen, wobei die Obertrume der beiden einander zugeordneten Förderbänder die Förderebene bilden, auf der sich der Werkstückträger 16 befindet. Jedes Förderband läuft um Umlenkrollen 17 um. Die Antriebsräder der Förderbänder sind in den Zeichnungen nicht dargestellt. Die beiden Förderbänder eines Duplexförderers sind synchron zueinander angetrieben. Zwischen Untertrum und Obertrum eines jeden Förderbandes erstreckt sich ein Tragprofil 18, das eine Auflagefläche für den Obertrum des Förderbandes aufweist und einen aufragenden Führungsrand 19 zur seitlichen der Werkstückträger 16 hat. Die Umlenkrollen 17 sind an den Enden der Tragprofile 18 mit Rollenhaltern 20 gelagert, von denen in Fig. 1 nur einer dargestellt ist.

An der Umsetzstation 21, an der die beiden Duplexförderer 10 und 13 unter einem rechten Winkel gegeneinander stoßen, sind die im Winkel inneren Förderbänder 11 und 14 kürzer ausgebildet als die im Winkel äußeren Förderbänder 12 und 15. Dies bedeutet, daß bei dem ersten Duplexförderer 10 das Förderband 12 das Förderband 11 in Längsrichtung überrragt und daß bei dem Duplexförderer 13 das Förderband 15 das Förderband 14 ebenfalls in Längsrichtung überragt. Die kürzeren Förderbänder 11 und 14 sind mit ihren Umlenkrollen 17 einander benachbart angeordnet, und zwar so, daß keines dieser Förderbänder in die Verlängerung des anderen Förderbandes hinein vorsteht. In gleicher Weise sind die Umlenkrollen 17 der langen Förderbänder 12 und 15 in der Weise angeordnet, daß keines dieser Förderbänder in die Verlängerung des anderen Förderbandes hineinragt.

In Verlängerung des Förderweges des kurzen Förderers 11 ist eine Stützvorrichtung 22 angeordnet, die eine hochkant stehende horizontale Leiste 23 etwa in Verlängerung der Führungsleiste 19 aufweist. An der Leiste 23 sind zahlreiche Rollen 24 mit horizontaler Achse gelagert, wobei die Rollenachsen von der Leiste 23 in Richtung auf das Förderband 12 abstehen. Diese Rollen 24 übernehmen die Unterstützung des von dem Förderband 11 kommenden Randes des Werkstückträgers 16, während der gegenüberliegende Rand noch weiterhin auf dem Förderband 12 aufliegt.

In ähnlicher Weise ist in Verlängerung des kürzeren Förderbandes 14 eine Stützvorrichtung 25 vorgesehen, die eine Leiste 26 aufweist, von der Stützrollen 27 mit parallelen horizontalen Achsen abstehen. Die Stützrollen 24 und 27 sind mit Rollenlagern frei drehbar gelagert.

Jede der Stützvorrichtungen 22 und 25 ist von einer darunter angeordneten Hubvorrichtung 28 bzw. 29 heb- und senkbar, wobei die Auflageebene der Stützrollen sich im angehobenen Zustand etwa auf der Höhe der Förderebene der Förderbänder befindet.

Es sei angenommen, daß ein Werkstückträger in Richtung des in Fig. 1 eingezeichneten Pfeiles 30 zunächst auf dem Duplexförderer 10 zu der Umsetzstation 21 gefördert wird und diese dann auf dem Duplexförderer 13 in Richtung des Pfeiles 31 verlassen soll und daß die Förderbänder der Duplexförderer mit entsprechenden Laufrichtungen angetrieben sind. Vor der Umsetzstation 21 ist im Bereich des Duplexförderers 10 zwischen den beiden Förderbändern 11 und 12 eine Anschlagstation 32 angeordnet, die den ankommenden Werkstückträger 16 anhält, wenn die Umsetzstation 21 nicht in aufnahmebereitem Zustand ist. Die Förderbänder 11 und 12 drehen dann unter dem angehaltenen Werkstückträger 16 durch. Wenn die Stützvorrichtung 25 im abgesenkten Zustand und die Stützvorrichtung 22 im angehobenen Zustand ist, so wie dies in Fig. 2 dargestellt ist, wird der Werkstückträger 16 über das Ende des Förderbandes 11 hinaus vorgeschoben, während der andere Rand noch auf dem Förderband 12 aufliegt und von diesem abgestützt und transportiert wird. Der den Förderer 11 überragende Rand des Werkstückträgers 16 wird anschließend von den Stützrollen 24 der Stützvorrichtung 22 abgestützt, während der Werkstückträger über die abgesenkte Stützvorrichtung 25 hinwegläuft. Die Vorderkante des Werkstückträgers 16 stößt schließlich gegen einen pneumatischen Stoßdämpfer 34, der quer über das Förderband 15 ragt und zurückweicht, so daß die Vorderkante sanft gegen die Führungsleiste 19 stößt, die die Außenkante des Förderbandes 15 begrenzt. Der vordere Rand des Werkstückträgers wird nunmehr von dem Förderband 15 abgestützt. Sobald dies der Fall ist, wird die Stützvorrichtung 25 angehoben und die Stützvorrichtung 22 abgesenkt, so daß der Werkstückträger nunmehr mit einem Rand auf den Stützrollen 27 und mit dem entgegengesetzten Rand auf dem Förderband 15 ruht. Durch den Antrieb des Förderbandes 15 wird der Werkstückträger über die abgesenkte Stützvorrichtung 22 in Richtung des Pfeiles 31 gefördert, wobei sich schließlich der eine Rand auf das Förderband 14 auflegt.

Damit sichergestellt ist, daß die Vorderkante des ankommenden Werkstückträgers 16 nicht gegen das lange Förderband 15 stößt, ist die Umlenkrolle 17 des Förderbandes 11 etwas höher angeordnet als der Förderebene entspricht und auch die Stützrollen der Stützvorrichtungen sind so angeordnet, daß sie den Werkstückträger auf ein geringfügig über der Förderebene liegendes Niveau anheben. Beim Absenken der Stützvorrichtung wird dann der Werkstückträger auf das betreffende lange Förderband abgesenkt. Durch die geringfügig höhere Anbringung der Stützrollen 27 wird ebenfalls das Abheben des Werkstückträgers von dem betreffenden langen Förderband 12 erleichtert.

An der Umsetzstation 21 ist ein Sensor 33 angeordnet, der das Vorhandensein einer Kante eines in die Umsetzstation 21 einlaufenden oder aus ihr herauslaufenden Werkstückträgers 16 erkennt und die Umschaltung der Stützvorrichtungen 22 und 25 dann bewirkt, wenn ein Werkstückträger vollständig in die Umsetzstation eingelaufen ist und der Sensor 33 das Vorhandensein der Kante nicht mehr feststellt.

Die Hubvorrichtungen 28 und 29 der Stützvorrichtungen sind so gesteuert, daß abwechselnd entweder die eine oder die andere Stützvorrichtung im angehobenen Zustand ist. Wenn sich die Umsetzstation in der Wartestellung befindet, ist in Abhängigkeit von der reversierbaren Laufrichtung der Duplexförderer diejenige Stützvorrichtung im angehobenen Zustand, die in Förderrichtung hinter ihrem zugehörigen kurzen Förderband liegt.

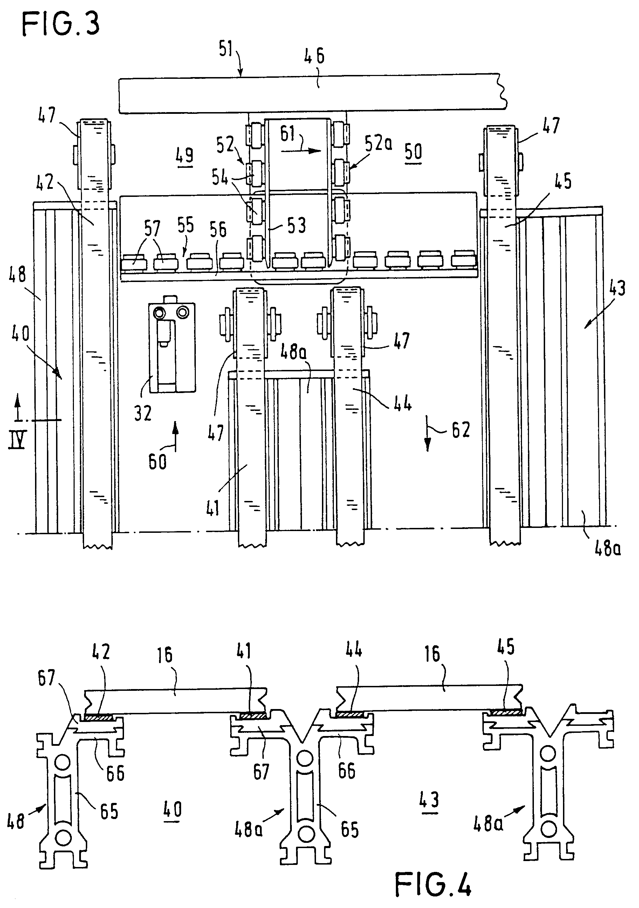

Bei dem Ausführungsbeispiel der Fign. 3 und 4 weist die Förderlinie einen ersten Duplexförderer 40 auf, der aus den mit gegenseitigem Abstand angeordneten parallelen Förderbändern 41,42 besteht, und einen zweiten Duplexförderer 43, der aus den beiden parallelen, mit gegenseitigem Abstand angeordneten Förderbändern 44 und 45 besteht. Die beiden Duplexförderer 40 und 43 sind parallel zueinander angeordnet und gegensinnig zueinander angetrieben. Auf den Duplexförderern können Werkstückträger von quadratischem Grundriß transportiert werden, die mit ihren Seitenrändern auf die beiden Förderbänder, z.B. die Förderbänder 41 und 42, aufgelegt werden.

Jedes der Förderbänder besteht aus einem endlosen Riemen, wobei die Obertrume der beiden einander zugewandten Förderbänder die Förderebene bilden, auf der sich der Werkstückträger befindet. Jedes Förderband läuft um Umlenkrollen 47 um. Die beiden Förderbänder eines Duplexförderers sind synchron zueinander angetrieben. Zwischen Untertrum und Obertrum eines jeden Förderbandes erstreckt sich ein Tragprofil 48 bzw. ein Doppel-Tragprofil 48a, das eine Auflagefläche für den Obertrum des Förderbandes aufweist.

Die Umsetzstation 51 weist am Ende des ankommenden Duplexförderers 40 einen quadratischen Aufnahmebereich 49 und am Beginn des Duplexförderers 43 einen ebenfalls quadratischen Abgabebereich 50 auf. Diese Bereiche 49 und 50 werden von dem Querförderband 46 begrenzt, das rechtwinklig zu den übrigen Förderbändern ausgebildet ist und auf der den Enden der inneren Förderbänder 41,44 gegenüberliegenden Seite liegt. Der Obertrum des Querförderbandes 46 befindet sich etwa auf gleicher Höhe wie die Obertrume der äußeren Förderer 42 und 45 der Duplexförderer 40 und 43.

In Verlängerung des Förderweges des kurzen Förderbandes 41 ist in dem Aufnahmebereich 49 eine Stützvorrichtung 52 angeordnet, die eine hochkant stehende horizontale Leiste 53 aufweist, an der zahlreiche Rollen 54 mit horizontaler Achse gelagert sind, wobei die Rollenachsen von der Leiste 53 in Richtung auf das Förderband 42 abstehen. Diese Rollen 54 übernehmen die Unterstützung des von dem Förderband 41 kommenden Randes des Werkstückträgers, während der gegenüberliegende Rand noch weiterhin auf dem Förderband 42 aufliegt. Eine weitere Stützvorrichtung 55, die eine Leiste 56 aufweist, von der Stützrollen 57 mit parallelen horizontalen Achsen abstehen, ist parallel zu dem Querförderband 46 unmittelbar hinter dem Ende des Förderbandes 41 angeordnet. Die Stützvorrichtung 55 erstreckt sich sowohl über den Aufnahmebereich 49 als auch über den Abgabebereich 50 und sie ist insgesamt anhebbar und absenkbar. Im Abgabebereich 50 ist in Verlängerung des Förderbandes 44 eine weitere Stützvorrichtung 52a angeordnet, die synchron mit der Stützvorrichtung 52 gesteuert ist.

Wie bei dem ersten Ausführungsbeispiel ist im Verlauf des Duplexförderers 40 kurz vor der Umsetzstation 51 eine Anschlagstation 32 angeordnet.

Es sei angenommen, daß ein Werkstückträger in Richtung des in Fig. 3 eingezeichneten Pfeiles 60 zunächst auf dem Duplexförderer 40 zu der Umsetzstation 51 gefördert wird und diese dann in Richtung des Pfeiles 61, also in Gegenrichtung, verlassen soll, und daß die Förderbänder der Duplexförderer mit entsprechenden Laufrichtungen angetrieben sind. Vor Erreichen des Aufnahmebereichs 49 der Umsetzstation 51 wird der ankommende Werkstückträger von einer Anschlagstation angehalten, wenn die Umsetzstation 51 nicht in aufnahmebereitem Zustand ist. Wenn die Stützvorrichtung 55 im abgesenkten Zustand und die Stützvorrichtung 52 im angehobenen Zustand ist, wird der Werkstückträger über das Ende des Förderbandes 41 hinaus vorgeschoben, während der andere Rand noch auf dem Förderband 42 aufliegt und von diesem abgestützt und transportiert wird. Der den Förderer 41 überragende Rand des Werkstückträgers wird anschließend von den Stützrollen 54 der Stützvorrichtung 52 abgestützt, während der Werkstückträger über die abgesenkte Stützvorrichtung 55 hinwegläuft. Die Vorderkante des Werkstückträgers stößt schließlich gegen eine (nicht dargestellte) Führungsleiste, die den Weg des Querförderbandes 46 nach außen hin begrenzt, so daß der vordere Rand des Werkstückträgers nunmehr von dem Querförderband 46 abgestützt wird. Sobald dies der Fall ist, wird die Stützvorrichtung 55 angehoben und die Stützvorrichtung 22 abgesenkt, so daß der Werkstückträger nunmehr mit einem Rand auf den Stützrollen 57 und mit dem entgegengesetzten Rand auf dem Querförderband 46 ruht.

Durch den Antrieb des Querförderbandes 46 wird der Werkstückträger über die abgesenkten Stützvorrichtungen 52 und 52a hinweg in Richtung des Pfeiles 61 von dem Aufnahmebereich 49 in den Abgabebereich 50 gefördert, bis er gegen eine Anschlagkante stößt, die den Weg des äußeren Förderbandes 45 nach außen begrenzt. Dann wird die Stützvorrichtung 55 abgesenkt und die Stützvorrichtung 52a angehoben. Durch den Antrieb des Förderbandes 45 wird der Werkstückträger über die abgesenkte Stützvorrichtung 55 in Richtung des Pfeiles 62 gefördert, wobei sich schließlich der eine Rand auf das Förderband 44 auflegt.

Fig. 4 zeigt die Tragprofile 18 und 18a, aus denen die Förderer 40 und 43 zusammengesetzt sind. Das Tragprofil 48 weist eine vertikale Tragleiste 65 auf, von deren oberem Ende eine Tragleiste 66 nach einer Seite hin absteht. Auf der Tragleiste 66 befindet sich ein Gleitbelag 67, der das Förderband 42 trägt. Die Doppel-Tragprofile 48a sind T-förmig ausgebildet. Sie weisen ebenfalls eine vertikale Tragleiste 66 auf. Von dieser Tragleiste steht eine erste Laufleiste 66 in der einen Richtung und eine zweite Laufleiste 67 in der anderen Richtung ab. Die eine Laufleiste trägt das Förderband 41 des einen Duplexförderers und die andere Laufleiste 66 trägt das Förderband 44 des benachbarten Duplexförderers 43. Auf diese Weise können die Duplexförderer 40 und 43 dicht nebeneinander angeordnet werden, so daß ein platzsparender Aufbau möglich ist.

## Patentansprüche

1. Duplex-Förderlinie mit einer Umsetzstation (21), die zwei unter einem Winkel zueinander angeordnete Duplexförderer (10,13) miteinander verbindet,
**dadurch gekennzeichnet,**
daß die beiden Förderbänder (11,12;14,15) eines jeden Duplexförderers (10,13) sich unterschiedlich weit in die Umsetzstation (21) erstrecken, wobei die Enden der im Winkel inneren kürzeren Förderbänder (11,14) einander benachbart und die Enden der im Winkel äußeren längeren Förderbänder (12,15) einander benachbart sind, und daß jedes der kürzeren Förderbänder (11,14) durch eine absenkbare Stützvorrichtung (22,25) verlängert ist.

2. Duplex-Förderlinie mit einer Umsetzstation (51), die zwei parallele, gegenläufig zueinander angetriebene Duplexförderer (40,43) miteinander verbindet,
**dadurch gekennzeichnet,**
daß die beiden äußeren Förderbänder (42,45) eines jeden Duplexförderers (40,43) sich bis in die Nähe eines Querförderbandes (46) in die Umsetzstation (51) erstrecken, während die inneren kürzeren Förderbänder (41,44) vor der Umsetzstation (51) enden, daß jedes der inneren Förderbänder (41,44) durch eine absenkbare Stützvorrichtung (52,52a) verlängert ist, und daß die Umsetzstation (51) mindestens eine parallel zu dem Querförderband (46) verlaufende weitere absenkbare Stützvorrichtung (55) aufweist, die den Bereich zwischen den äußeren Förderbändern (42,45) überbrückt.

3. Duplex-Förderlinie nach Anspruch 2, dadurch gekennzeichnet, daß die Schienen drehbar gelagerte Stützrollen (24,27;54,57) aufweisen.

4. Duplex-Förderlinie nach einem der Ansprüche 1-3, dadurch gekennzeichnet, daß die Umlenkrollen (17;47) der kürzeren Förderbänder (11,14;41,44) an der Umsetzstation (21;51) höher angeordnet sind als diejenigen der längeren Förderbänder (12,15;52,55).

5. Duplex-Förderlinie nach einem der Ansprüche 1-4, dadurch gekennzeichnet, daß die Stützvorrichtungen (22,25;52,55) seitliche Führungsleisten (23,26;53,56) aufweisen.

6. Duplex-Förderlinie nach einem der Ansprüche 1-5, dadurch gekennzeichnet, daß die Stützvorrichtungen (22,25;52,52a,55) wechselseitig so gesteuert sind, daß jeweils eine Stützvorrichtung auf etwa die Förderebene angehoben ist, während die andere Stützvorrichtung abgesenkt ist.

7. Duplex-Förderlinie nach einem der Ansprüche 1-6, dadurch gekennzeichnet, daß die Stützvorrichtungen (22,25;52,52a,55) in Abhängigkeit von der Laufrichtung der Förderer und in Abhängigkeit von einem die Anwesenheit eines Werkstückträgers (16) in der Umsetzstation (21;51) feststellenden Sensors (33) gesteuert sind.

8. Duplex-Förderlinie nach Anspruch 2, dadurch gekennzeichnet, daß die inneren Förderbänder (41,44) auf einem gemeinsamen Tragprofil (48a) laufen, das zwei Laufleisten (66,67) hat, welche von einem Tragsteg (65) nach entgegengesetzten Seiten abstehen und jeweils eines der Förderbänder (41,44) tragen.
